# EUROPÄISCHE PATENTSCHRIFT

(11) **EP 3 604 576 B1**
(45) Veröffentlichungstag und Bekanntmachung des Hinweises auf die Patenterteilung: **30.12.2020**
(21) Anmeldenummer: 18186629.4
(22) Anmeldetag: 31.07.2018
(51) Int. Cl.: C22C 11/00, C22C 11/06, H01M 4/16, H01M 4/38, H01M 4/73

(54) **BLEILEGIERUNG, ELEKTRODE UND AKKUMULATOR**
LEAD ALLOY, ELECTRODE AND ACCUMULATOR
ALLIAGE DE PLOMB, ÉLECTRODE ET ACCUMULATEUR

(43) Veröffentlichungstag der Anmeldung: 05.02.2020
(60) Teilanmeldung: 19186457.8 / 3 604 577
(73) Patentinhaber: HOPPECKE Batterien GmbH & Co. KG., 59929 Brilon (DE)
(72) Erfinder: CATTANEO, Eduardo, 59929 Brilon (DE); RIEGEL, Bernhard, 59929 Brilon (DE)
(74) Vertreter: Rausch Wanischeck-Bergmann Brinkmann

(56) Entgegenhaltungen:
- CN-A- 103 137 978
- JP-A- 2006 079 951
- JP-A- 2008 130 231
- US-A- 2 860 969
- US-B1- 6 180 286

## Beschreibung

Die Erfindung betrifft Bleilegierungen aufweisend wenigstens ein Seltenerdmetall, Verwendungen für die erfindungsgemäßen Bleilegierungen, eine Elektrode aufweisend ein Elektrodengerüst wenigstens teilweise bestehend aus einer der erfindungsgemäßen Bleilegierungen sowie einen Blei-Säure-Akkumulator aufweisend eine erfindungsgemäße Elektrode.

Bleilegierungen als Material für Elektrodengerüste zum Einsatz in Blei-Säure-Akkumulatoren sind dem Grunde nach aus dem Stand der Technik bekannt. Elektroden weisen zumeist ein festes Elektrodengerüst auf, das der Aufnahme einer pastösen aktiven Elektrodenmasse dient. Das Elektrodengerüst ist dabei zumeist als Elektrodengitter ausgebildet. Aus dem Stand der Technik sind jedoch auch weitere Formen bekannt. Unabhängig von der letztendlichen Form der Elektrodengerüste spricht man mit Bezug auf die Bleilegierungen üblicherweise von Elektrodengitterlegierungen.

Bei der Wahl der Bleilegierung spielen verschiedene Faktoren eine Rolle. Zum einen ist es erforderlich, dass die Bleilegierung auf wirtschaftlich sinnvolle Weise zu Elektrodengerüsten verarbeitet werden kann. Ferner muss die Bleilegierung eine vergleichsweise gute mechanische Stabilität aufweisen, um sowohl ihr eigenes vergleichsweise hohes Gewicht und das Gewicht der Elektrodenmasse über die gesamte Lebensdauer des Akkumulators tragen zu können. Darüber hinaus ist das Elektrodengerüst bei bestimmungsgemäßem Einsatz in einem Blei-Säure-Akkumulator stets in Kontakt mit einem hochkorrosiven Elektrolyten einerseits und mit den korrosiven Bestandteilen der aktiven Elektrodenmasse andererseits. Die Bleilegierung muss daher neben den vorgenannten Eigenschaften ferner korrosionsbeständig sein.

In diesem Zusammenhang sind beispielsweise aus der US 2,860,969 A Blei-Calcium-Cer haltige Legierungen bekannt. Die Druckschrift ist mit der Überwindung der Nachteile von Blei-Antimon Legierungen als Elektrodengittermaterial befasst. Antimon wurde in Bleilegierungen ursprünglich dafür verwendet der Legierung mechanische Stabilität zu verleihen. Die konkret vorgeschlagene PbCaSnCe-haltige Legierung sieht als Ersatz für Antimon Calcium vor, um die notwendige mechanische Stabilität bereitzustellen und die Abscheidung von Antimon auf der negativen Platte aufgrund positiver Gitterkorrosion zu verhindern. Bekanntermaßen führt die Kontaminierung der negativen Aktivmasse durch Antimon zu erhöhtem Wasserlust durch Elektrolyse und Sulfatierung der negativen Platten.

Die Legierungskomponente Cer dient demgegenüber der Verbesserung der Korrosionseigenschaften durch Verfeinerung der Korngrößen. Gitter mit grobkörnigen Gefügen haben Stege und Rahmen bestehend aus wenigen Körnern. In diesem Fall dringt der Korrosionsangriff an Korngrenzen schnell tief in die Stegen bzw. Rahmen. Diese Art intergranularer Korrosion führt in der Regel zu frühzeitigem Gitterzerfall.

Elektrodengerüste aus vorgenannten Legierungen haben jedoch den Nachteil, dass sie während des bestimmungsgemäßen Betriebs zu Gitterwachstum neigen, was von einer Beeinträchtigung der positiven Gittermasseanbindung bis hin zu erheblichen Kapazitätsverlusten des Akkumulators führen kann. Das Phänomen des Gitterwachstums ist die Folge eines im Laufe der Zeit zunehmenden Mangels an Kriechfestigkeit der Gitterlegierungen. Dieser irreversible Verlust von mechanischer Festigkeit wird auch "Überalterung" bezeichnet. Unter diesen Bedingungen erzeugt die zunehmenden Dicke der Korrosionsschicht eine axiale Kraft, die zu einer erheblichen Dehnung der Gitterstege und Rahmen führt.

Darüber hinaus ist aus der JP 2006/079951 A eine calciumfreie Bleilegierung bekannt, die aus 0,02 Gew.-% Aluminium, 0,01 Gew.-% Ytterbium und einem sich zu 100 Gew.-% addierenden Rest Blei besteht.

Ferner ist aus der CN 103137978 A eine calciumfreie Bleilegierung bestehend aus 0,15 bis 10 Gew.-% Zinn, 0,02 bis 3 Gew.-% Aluminium, 0,01 bis 5 Gew.-% Lanthan und einem sich zu 100 % addierenden Rest Blei besteht.
Der Erfindung liegt damit die technische **Aufgabe** zugrunde, eine alternative Legierung bereitzustellen, die als Material für Elektrodengerüste geeignet ist, d.h. wirtschaftlich sinnvoll in der Industrieproduktion verarbeitbar, ausreichend mechanisch stabil und korrosionsbeständig und darüber hinaus eine weiter verminderte Neigung zu Gitterwachstum während des Betriebs in einem Blei-Säure-Akkumulator aufweist.

Zur **Lösung** der Aufgabe schlägt die Erfindung eine calciumfreie Bleilegierung gemäß Anspruch 1 vor.

Zu den "Seltenerdmetallen" im Sinne der Erfindung zählen dabei die Metalle der Gruppe der Lanthanoide sowie die Metalle der 3. Nebengruppe des Periodensystems Scandium und Yttrium. Eine "Bleilegierung" bezeichnet eine solche Legierungszusammensetzung, die zu einem überwiegenden Gewichtsanteil Blei aufweist. Dabei addieren sich die angegebenen potenziellen weiteren Legierungskomponenten mit dem überwiegenden Rest Blei zu 100 Gew.-%.

Der Erfindung liegt die Erkenntnis zugrunde, dass Calcium als Legierungskomponente in Bleilegierungen vorrangig für das unerwünschte Gitterwachstum während des Betriebs in Blei-Säure-Akkumulatoren verantwortlich ist. Die erfindungsgemäße Bleilegierung nutzt dabei die synergetische Wirkung einer Kombination aus Blei und Seltenerdmetallen in der angegebenen Zusammensetzung aus, um zu einer Legierung zu gelangen, die im Vergleich zu den aus dem Stand der Technik bekannten Bleilegierungen ein vermindertes Wachstum zeigt.

Es hat sich in vollkommener Abkehr vom Stand der Technik überraschend gezeigt, dass calciumfreie Bleilegierungen, die als weiteren wesentlichen Bestandteil lediglich ein Seltenerdmetall aufweisen, insbesondere den mechanischen Anforderungen an eine Elektrodengitterlegierung genügen. Dies war nicht zu erwarten, da in der Fachwelt bisher davon ausgegangen wurde, dass entweder Antimon oder Calcium als Legierungskomponente zur Aushärtung zwingend erforderlich sei, um die notwendige mechanische Stabilität der Bleilegierung zu gewährleisten. Durch den vollständigen Verzicht auf Calcium als Legierungskomponente wird überdies das Herstellungsverfahren der Legierung vereinfacht und der Bedarf an Lagerfläche zur Vorhaltung von Calcium verringert. "Calciumfrei" im Sinne der Erfindung meint dabei, dass Calcium kein bestimmungsgemäßer Bestandteil der Legierung ist. Die Bleilegierung wird hierzu soweit technisch möglich und wirtschaftlich vertretbar von calciumhaltigen Bestandteilen freigehalten. Gleichwohl kann die Bleilegierung Calciumverunreinigungen enthalten, die mit wirtschaftlich vertretbarem Aufwand nicht zu vermeiden sind. Diese Verunreinigungen haben jedoch, sofern sie vorhanden sein sollten, auf die Eigenschaften der Legierung keinen Einfluss.

Erfindungsgemäß weist die calciumfreie Bleilegierung wenigstens zwei Seltenerdmetalle auf. Dies sind ein Lanthanoid, bevorzugt ein Mischmetall aufweisend wenigstens zwei Lanthanoide, und Yttrium. Besonders positiv sowohl für die mechanische Stabilität der Legierung als auch für deren Korrosionsbeständigkeit haben sich dabei Lanthan, Cer, Lanthan-Cer-Mischmetall und Yttrium erwiesen. Gemäß einem Merkmal der Erfindung weist die Bleilegierung Yttrium und wenigstens ein Lanthanoid oder bevorzugt ein Mischmetall daraus auf. Insbesondere die Kombination aus Yttrium und Lanthan hat sich hinsichtlich der mechanischen Stabilität, der Korrosionsbeständigkeit und der Inhibierung von Gitterwachstum beim bestimmungsgemäßen Gebrauch als besonders vorteilhaft erwiesen.

Erfindungsgemäß beträgt der Gewichtsanteil der wenigstens zwei Seltenerdmetalle 0,003 Gew.-% bis 0,025 Gew.-%. Vorzugsweise beträgt der Gewichtsanteil der wenigstens zwei Seltenerdmetalle 0,005 Gew.-% bis 0,020 Gew.-%. Bevorzugte calciumfreie Bleilegierungen sind in diesem Zusammenhang Pb-La-Y, Pb-Ce-Y oder Pb-La-Ce-Y. Hinsichtlich der quantitativen Zusammensetzung sind insbesondere die Legierungen Pb-La0,01-Y0,01, Pb-Ce0,01-Y0,01 oder Pb-La0,01-Ce0,005-Y0,005 bevorzugt.

Obwohl eine calciumfreie Bleilegierung, die ausschließlich aus 0,005 Gew.-% - 0,025 Gew.-% wenigstens zweier Seltenerdmetalle sowie einem sich zu 100 Gew.-% addierenden Rest Blei besteht, vollumfänglich als Elektrodengitterlegierung geeignet ist, ist es gemäß einer bevorzugten Ausgestaltung der Erfindung vorgesehen, dass die Bleilegierung weitere Legierungskomponenten aufweist. Diese Legierungskomponenten sind ausgewählt aus der Gruppe Sn, Ag, Ba, Bi und Al. Die Legierungskomponenten dienen der Verbesserung verschiedener Eigenschaften der Bleilegierung. Insbesondere dienen sie dazu, die Bleilegierung für verschiedene Verarbeitungsverfahren zu optimieren. Solche Verarbeitungsverfahren umfassen im Bereich der Gießtechnik insbesondere Fallguss, Druckguss, kontinuierlichen Guss (z.B. ConCast gemäß US4544014, wobei der Inhalt dieses Dokuments nicht zur Erfindung gehört) und Walz-/Stanztechniken.

In Kombination mit der erfindungsgemäßen calciumfreien Bleilegierung haben die vorgenannten optionalen Legierungskomponenten folgende technische Effekte:
Zinn (Sn) verlangsamt die Überalterung des Gefüges, erhöht die Leitfähigkeit der Korrosionsschichten und trägt somit zur Erhöhung der Stromaufnahmefähigkeit, Zyklenfestigkeit und die Erholungsfähigkeit der Batterien nach Tiefentladungen bei. Der Gewichtsanteil von Sn in der Legierung liegt bei maximal 2,0 Gew.-%. Bevorzugt beträgt er von 0,2 Gew.-% bis 2,0 Gew.-%.

Silber (Ag) verbessert die Korrosionsbeständigkeit und erhöht die Kriechfestigkeit der Bleilegierungen bei hohen Temperaturen. Der Gewichtsanteil von Ag in der Legierung liegt bei maximal 0,035 Gew.-%. Bevorzugt beträgt er von 0,008 Gew.-% bis 0,035 Gew.-%.

Barium (Ba) erhöht (selbst in vergleichsweise kleinen Mengen) die mechanische Festigkeit der Bleilegierungen. Der Gewichtsanteil von Ba in der Legierung liegt bei maximal 0,07 Gew.-%. Bevorzugt beträgt er von 0,03 Gew.-% bis 0,07 Gew.-%.

Bismut (Bi) trägt zur Gitterhärte bei. Der Gewichtsanteil von Bi in der Legierung liegt bei maximal 0,03 Gew.-%. Bevorzugt beträgt er von 0,005 Gew.-% bis 0,03 Gew.-%.

Aluminium (AI) schützt die Schmelzen im Herstellungsprozess der Bleilegierung gegen Luftoxidation. Vorzugsweise wird Al nur zusammen mit Ba verwendet, da bariumhaltige Schmelzen im Besonderen zu Oxidation an der Luft neigen. Der Gewichtsanteil von Al in der Legierung liegt bei maximal 0,012 Gew.-%. Bevorzugt beträgt er von 0,005 Gew.-% bis 0,012 Gew.-%.

Ferner betrifft die Erfindung die Verwendung der erfindungsgemäßen Bleilegierungen als Material für eine Elektrodenstruktur für Blei-Säure-Akkumulatoren. Bevorzugt ist die Verwendung als Material für ein Elektrodengitter. Durch die erfindungsgemäße Verwendung der Bleilegierungen kann ein für den Einsatz in einem Blei-Säure-Akkumulator geeignetes Elektrodengerüst bereitgestellt werden, dessen Lebensdauer zumindest durch eine Verringerung des Wachstumseffekts des Elektrodengerüsts im bestimmungsgemäßen Betrieb verlängert ist.

Darüber hinaus sind die erfindungsgemäßen Bleilegierungen in verschiedenen Verarbeitungsprozessen, insbesondere im Bereich der Gusstechnik, verwendbar. Vorzugsweise ist eine Verwendung der erfindungsgemäßen Bleilegierungen als Ausgangsmaterial in einem Herstellungsverfahren für Elektrodengerüste, insbesondere Elektrodengitter, vorgesehen.

Bei der Verarbeitung von calciumfreien Bleilegierungen sind kontinuierliche Gießverfahren bevorzugt.

Eine der bevorzugten kontinuierlichen Gussverfahren ist das ConCast Verfahren. In dieser Technologie, beschrieben in US 4,544,014, spielt eine zylindrische Drehtrommel die Rolle der Gießform. Die Gittermuster in Form eines Gitterbandes werden auf der Umfangsfläche der Gießtrommel eingraviert. Die Kavitäten der Gravur (d.h. die Stege und Rahmen) werden mit geschmolzenem Blei unter Druck gefüllt, das durch Öffnungen aus den Öffnungsschlitzen eines Gießschuhs zugeführt wird.

Eine weitere ebenfalls bevorzugte Möglichkeit zur kontinuierlichen Gitterbandherstellung ist das Walzen- und Stanzen Verfahren: Bei diesem Verfahren wird zunächst ein dickes Band kontinuierlich gegossen. Die ca. 10 mm Banddicke wird unmittelbar nach dem Gießen durch die Einwirkung von 4 bis 6 Walzstufen auf 1 mm Dicke reduziert. Anschließend wird der 1 mm dicke Bleilegierungsstreifen zu einem Gitterband nach beliebigem Gittermuster ausgestanzt.

Die Bleilegierung ist durch die Wahl ihrer Komponenten vergleichsweise gut verarbeitbar, wodurch sie im Unterschied zu aus dem Stand der Technik bekannten Legierungen in verschiedensten Verfahren eingesetzt werden kann.

Darüber hinaus betrifft die Erfindung eine Elektrode für einen Blei-Säure-Akkumulator mit einem Elektrodengerüst, welches wenigstens teilweise aus wenigstens einer der erfindungsgemäßen Bleilegierungen gebildet ist. Gemäß einer bevorzugten Ausgestaltung der Erfindung ist das Elektrodengerüst vollständig aus nur einer der erfindungsgemäßen Bleilegierungen gebildet. Durch den Einsatz der erfindungsgemäßen Bleilegierungen wird die Lebensdauer der Elektrode und des Akkumulators insgesamt verbessert.

Gemäß einer bevorzugten Weiterbildung der Erfindung weist die Elektrode eine pastöse aktive Masse auf, welche von dem Elektrodengerüst aufgenommen ist. Es hat sich gezeigt, dass die erfindungsgemäßen Bleilegierungen besonders gut mit der aktiven Elektrodenmasse wechselwirken. Die Adhäsion der aktiven Elektrodenmasse am Elektrodengerüst wird somit verstärkt, wodurch die Elektrode insgesamt eine verbesserte mechanische Stabilität und ein verbessertes Lade-Entladeverhalten aufweist.

Die Erfindung betrifft ferner einen Blei-Säure-Akkumulator aufweisend eine erfindungsgemäße Elektrode. Durch den Einsatz einer Elektrode mit einem Elektrodengerüst aus einer erfindungsgemäßen Bleilegierung wird die Lebensdauer des Akkumulators durch die Verringerung von Elektrodenwachstum verbessert. Es wird folglich ein Blei-Säure-Akkumulator mit vergleichsweise langer Lebensdauer bereitgestellt. Vorzugsweise ist der Blei-Säure-Akkumulator ein VRLA-Akkumulator (ventilgeregelter Blei-Säure-Akkumulator). Hierdurch ist der Akkumulator insbesondere zum Einsatz in Traktionsbatterien und stationären Anlagen geeignet.

Nachfolgend werden Beispiele für bevorzugte Legierungszusammensetzungen und für nicht erfindungsgemäße Legierungszusammensetzungen gegeben:
Veraleichsbeispiel 1 (nicht erfindungsgemäß)

| | |
|---|---|
| 0,005 Gew.-% - 0,025 Gew.-% | La |
| Rest | Pb. |

Vergleichsbeispiel 2 (nicht erfindungegemäß)

| | |
|---|---|
| 0,005 Gew.-% - 0,025 Gew.-% | Ce |
| Rest | Pb. |

Vergleichsbeispiel 3 (nicht erfindungsgemäß)

| | |
|---|---|
| 0,005 Gew.-% - 0,025 Gew.-% | Y |
| Rest | Pb. |

Ausführungsbeispiel 1

| | |
|---|---|
| 0,008 Gew.-% - 0,025 Gew.-% | La |
| 0,008 Gew.-% - 0,025 Gew.-% | Y |
| Rest | Pb. |

Vergleichsbeispiel 4 (nicht erfindungsgemäß

| | |
|---|---|
| 0,008 Gew.-% - 0,025 Gew.-% | La |
| 0,008 Gew.-% - 0,025 Gew.-% | Ce |
| Rest | Pb. |

Ausführungsbeispiel 2

| | |
|---|---|
| 0,008 Gew.-% - 0,025 Gew.-% | Ce |
| 0,008 Gew.-% - 0,025 Gew.-% | Y |
| Rest | Pb. |

Ausführungsbeispiel 3

| | |
|---|---|
| 0,008 Gew.-% - 0,025 Gew.-% | La |
| 0,008 Gew.-% - 0,025 Gew.-% | Ce |
| 0,008 Gew.-% - 0,025 Gew.-% | Y |
| Rest | Pb. |

Ausführungsbeispiel 4

| | |
|---|---|
| 0,1 Gew.-% - 0,8 Gew.-% | Sn |
| 0,008 Gew.-% - 0,025 Gew.-% | La |
| 0,008 Gew.-% - 0,025 Gew.-% | Y |
| Rest | Pb. |

Vergleichsbeispiel 5 (nicht erfindungsgemäß)

| | |
|---|---|
| 0,1 Gew.-% - 0,8 Gew.-% | Sn |
| 0,008 Gew.-% - 0,025 Gew.-% | La |
| 0,008 Gew.-% - 0,025 Gew.-% | Ce |
| Rest | Pb. |

Ausführungsbeispiel 5

| | |
|---|---|
| 0,1 Gew.-% - 0,8 Gew.-% | Sn |
| 0,01 Gew.-% - 0,025 Gew.-% | Ag |
| 0,008 Gew.-% - 0,025 Gew.-% | La |
| 0,008 Gew.-% - 0,025 Gew.-% | Y |
| Rest | Pb. |

Vergleichsbeispiel 6 (nicht erfindungsgemäß)

| | |
|---|---|
| 0,1 Gew.-% - 0,8 Gew.-% | Sn |
| 0,01 Gew.-% - 0,025 Gew.-% | Ag |
| 0,008 Gew.-% - 0,025 Gew.-% | La |
| 0,008 Gew.-% - 0,025 Gew.-% | Ce |
| Rest | Pb. |

## Patentansprüche

1. Calciumfreie Bleilegierung , bestehend aus:
| | |
|---|---|
| 0,003 Gew.-% - 0.025 Gew.-% | wenigstens Seltenerdmetalle zwei |
| 0,0 Gew.-% - 2,0 Gew.-% | Sn |
| 0,0 Gew.-% - 0,035 Gew.-% | Ag |
| 0,0 Gew.-% - 0,07 Gew.-% | Ba |
| 0,0 Gew.-% - 0,03 Gew.-% | Bi |
| 0,0 Gew.-% - 0,012 Gew.-% | Al |
| Rest | Pb; |
wobei die Summe aller Gewichtsanteile der Legierungskomponenten in der Bleilegierung 100 Gew.-% beträgt, **dadurch gekennzeichnet, dass** als Seltenerdmetalle wenigstens ein Lanthanoid und Yttrium in der Bleilegierung enthalten sind.

2. Calciumfreie Bleilegierung gemäß Anspruch 1, enthaltend:
| | |
|---|---|
| 0,01 Gew.-% - 0,8 Gew.-% | Sn |
| und | |
| 0,01 Gew.-% - 0.025 Gew.-% | Ag |

3. Calciumfreie Bleilegierung gemäß einem der Ansprüche 1 oder 2, **dadurch gekennzeichnet, dass** das wenigstens eine Lanthanoid, La, Ce oder ein LaCe-Mischmetall, ist.

4. Calciumfreie Bleilegierung gemäß einem der Ansprüche 1 bis 3, **gekennzeichnet durch**
| | |
|---|---|
| 0.003 Gew.-% - 0,012 Gew.-% | des wenigstens einen Lanthanoids |
| und | |
| 0.003 Gew.-% - 0,012 Gew.-% | Y. |

5. Verwendung einer calciumfreien Bleilegierung gemäß einem der Ansprüche 1 bis 4 als Material für ein Elektrodengerüst in Form eines Elektrodengitters, für Blei-Säure-Akkumulatoren.

6. Verwendung einer calciumfreien Bleilegierung gemäß Anspruch 5, in einem kontinuierlichen Gussverfahren zur Herstellung eines Elektrodengerüsts, insbesondere eines Elektrodengitters, für Blei-Säure-Akkumulatoren.

7. Elektrode für einen Blei-Säure-Akkumulator, mit einem Elektrodengitter, welches wenigstens teilweise aus einer Bleilegierung gemäß einem der Ansprüche 1 bis 6 gebildet ist.

8. Elektrode gemäß Anspruch 7, **gekennzeichnet durch** eine pastöse aktive Elektrodenmasse, welche von dem Elektrodengitter aufgenommen ist.

9. Blei-Säure-Akkumulator aufweisend eine Elektrode gemäß einem der Ansprüche 7 oder 8

## Claims

1. A calcium-free lead alloy, consisting of:
| | |
|---|---|
| 0.003 % by weight - 0.025 % by weight | at least two rare earth metals |
| 0.0 % by weight - 2.0 % by weight | Sn |
| 0.0 % by weight - 0.035 % by weight | Ag |
| 0.0 % by weight - 0.07 % by weight | Ba |
| 0.0 % by weight - 0.03 % by weight | Bi |
| 0.0 % by weight - 0.012 % by weight | Al |
| the rest being | Pb; |
wherein the sum of all parts by weight of the alloying components in the lead alloy amounts to 100 % by weight, **characterized in that** at least one lanthanoid and yttrium are contained as rare earth metals in the lead alloy.

2. A calcium-free lead alloy according to claim 1, containing:
| | |
|---|---|
| 0.01 % by weight - 0.8 % by weight | Sn |
| and | |
| 0.01 % by weight - 0.025 % by weight | Ag. |

3. A calcium-free lead alloy according to one of the claims 1 or 2, **characterized in that** the at least one lanthanoid is La, Ce or a LaCe composition metal.

4. A calcium-free lead alloy according to one of the claims 1 through 3, **characterized by**
| |
|---|
| 0.003 % by weight - 0.012 % by weight of the at least one lanthanoid |
| And |
| 0.003 % by weight - 0.012 % by weight Y. |

5. A use of a calcium-free lead alloy according to one of the claims 1 through 4 as material for an electrode framework in form of an electrode grid for lead acid accumulators.

6. A use of a calcium-free lead alloy according to claim 5, in a continuous casting process for producing an electrode framework, in articular an electrode grid, for lead acid accumulators.

7. An electrode for a lead acid accumulator, comprising an electrode grid, which is at least partly made of a lead alloy according to one of the claims 1 through 6.

8. An electrode according to claim 7, **characterized by** a pasty active electrode mass, which is received by the electrode grid.

9. A lead acid accumulator comprising an electrode according to one of the claims 7 or 8.

## Revendications

1. Alliage de plomb sans calcium, constitué par :
| | |
|---|---|
| 0,003 % en poids - 0,025 % en poids | d'au moins deux métaux des terres rares |
| 0,0 % en poids - 2,0 % en poids de | Sn |
| 0,0 % en poids - 0,035 % en poids de | Ag |
| 0,0 % en poids - 0,07 % en poids de | Ba |
| 0,0 % en poids - 0,03 % en poids de | Bi |
| 0,0 % en poids - 0,012 % en poids de | Al |
| le reste étant du | Pb ; |
dans lequel la somme de tous les rapports de poids des composants d'alliage dans l'alliage de plomb est 100 % en poids, **caractérisé en ce qu'**au moins un lanthanide et de l'yttrium sont contenus comme des métaux des terres rares dans l'alliage de plomb.

2. Alliage de plomb sans calcium selon la revendication 1, contenant :
| | |
|---|---|
| 0,01 % en poids - 0,8 % en poids de | Sn |
| et | |
| 0,01 % en poids - 0,025 % en poids de | Ag. |

3. Alliage de plomb sans calcium selon l'une des revendications 1 ou 2, **caractérisé en ce que** l'au moins un lanthanide est La, Ce ou un mischmétal LaCe.

4. Alliage de plomb sans calcium selon l'une des revendications 1 à 3, **caractérisé par**
| | |
|---|---|
| 0,003 % en poids - 0,012 % en poids de | l'au moins un lanthanide |
| et | |
| 0,003 % en poids - 0,012 % en poids de | Y. |

5. Utilisation d'un alliage de plomb sans calcium selon l'une des revendications 1 à 4 en tant que matériau pour un support d'électrodes en forme d'une grille d'électrodes pour des accumulateurs plomb-acide.

6. Utilisation d'un alliage de plomb sans calcium selon la revendication 5, dans un procédé de moulage continu pour fabriquer un support d'électrodes, notamment une grille d'électrodes, pour des accumulateurs plomb-acide.

7. Electrode pour un accumulateur plomb-acide, comprenant une grille d'électrodes, qui est au moins partiellement formée en un alliage de plomb selon l'une des revendications 1 à 6.

8. Electrode selon la revendication 7, **caractérisé par** une masse d'électrode pâteuse et active, qui est reçue par la grille d'électrodes.

9. Accumulateur plomb-acide comprenant une électrode selon l'une des revendications 7 ou 8.
